Europäisches Patentamt

European Patent Office

Office européen des brevets

(11) Veröffentlichungsnummer : **0 168 551**
**B1**

(12) EUROPÄISCHE PATENTSCHRIFT

(45) Veröffentlichungstag der Patentschrift :
**11.10.89**

(51) Int. Cl.⁴ : **G 01 N 27/56**

(21) Anmeldenummer : 85102340.8

(22) Anmeldetag : 01.03.85

(54) Verfahren und Vorrichtung zur Messung geringer Aktivitätswerte von Ionen eines Probenstroms in einem Analysenautomaten.

(30) Priorität : 18.07.84 CH 3486/84

(43) Veröffentlichungstag der Anmeldung :
22.01.86 Patentblatt 86/04

(45) Bekanntmachung des Hinweises auf die Patenterteilung : 11.10.89 Patentblatt 89/41

(84) Benannte Vertragsstaaten :
AT DE FR GB IT NL

(56) Entgegenhaltungen :
EP--A-- 0 024 891
EP--A-- 0 140 538
US--A-- 4 449 981

(73) Patentinhaber : ZELLWEGER USTER AG
Wilstrasse 11
CH-8610 Uster (CH)

(72) Erfinder : Ertl, Stefan
Heusserstrasse 15
CH-8634 Hombrechtikon (CH)
Erfinder : Jola, Martin
Eilweg 22
CH-8634 Hombrechtikon (CH)

(74) Vertreter : Dipl.-Phys.Dr. Manitz Dipl.-Ing., Dipl.-
Wirtsch. Finsterwald Dipl.-Ing. Grämkow Dipl.-
Chem.Dr. Heyn Dipl.-Phys. Rotermund
Morgan, B.Sc.(Phys.) Robert-Koch-Strasse 1
D-8000 München 22 (DE)

## Beschreibung

Die Erfindung betrifft ein Verfahren zur Messung geringer Aktivitätswerte von Ionen eines Probenstroms in einem Analysenautomaten, bei welchem der Probenstrom durch Zugabe von Reagentien konditioniert und die Konzentration der Ionen mittels eines an eine Einrichtung zur Abgabe einer entsprechenden Eichsubstanz anschliessbaren Messystem gemessen wird.

Derartige Verfahren werden beispielsweise zur Messung der Natriumionenaktivität oder der Chloridionenaktivität in einem Wasserstrom verwendet. Die Bestimmung niedriger Ionenaktivitätswerte in einem Probenstrom ist dadurch begrenzt, dass durch das Ansprechen der Elektrode auf $H^-$- und $OH^-$-Ionen Störungen auftreten, welche zu merklichen Messfehlern führen. Da in sämtlichen wässrigen Probenströmen $H^+$- und $OH^-$-Ionen enthalten sind, ist vor der elektrochemischen Bestimmung niedriger Kationen- und Anionenaktivitätswerte eine Einstellung des pH-Werts mit einem Konditionierungsmittel von wesentlicher Bedeutung, um eine genaue Messung zu ermöglichen. Bei Zugabe einer Säure als Konditionierungsmittel wird der pH-Wert gesenkt, indem aus dem Probenstrom $OH^+$-Ionen weggefangen werden, bei Zugabe einer Base als Konditionierungsmittel wird der pH-Wert erhöht, indem $H^+$-Ionen im Probenstrom weggefangen werden.

Da Nullpunkt und Steilheit des zur Messung der Ionenaktivität verwendeten Messystems, welches aus einer Mess- und einer Bezugselektrode besteht, über längere Zeit einer Drift unterliegen, ist eine regelmässige Eichung des Messystems erforderlich. Diese Drift hat ihre Ursache beispielsweise in Veränderungen der Messelektrode und des Diffusionspotentials der Bezugselektrode. Aus bekannten Gründen wird die Eichung in der Nähe des Bereichs der zu messenden Ionenaktivität vorgenommen.

Bei bekannten Messverfahren der eingangs genannten Art erfolgt die Eichung mit einer Eichlösung, welche man unter Zuhilfenahme einer eine Dosierpumpe aufweisenden Dosiereinheit dem Probenstrom beigibt, wodurch in diesem eine bekannte Konzentration der zu messenden Ionen erzeugt wird.

Abgesehen davon, dass die Dosierpumpe einen zusätzlichen und daher unerwünschten Aufwand bedeutet, bereitet die Eichung mit einer Eichlösung bei der Messung niedriger Aktivitäten in der Grössenordnung von unter $10^{-6}$ in hochreinem Wasser einige Schwierigkeiten und stellt an die Zubereitung der Eichlösung und an die Präzision der Dosierpumpe höchste Anforderungen.

Durch die Erfindung soll nun ein Verfahren zur Messung geringer Aktivitätswerte von Ionen eines Probenstroms geschaffen werden, welches weder eine Eichlösung noch eine spezielle Dosierpumpe erfordert.

Diese Aufgabe wird erfindungsgemäss dadurch gelöst, dass als Eichsubstanz ein lösliches Glas für die definierte Abgabe einer bekannten Menge der zu messenden Ionen verwendet und die Eichkonzentration direkt im Probenstrom eingestellt wird.

Durch die Verwendung des löslichen Glases und durch die Einstellung der Eichkonzentration direkt im Probenstrom benötigt man weder eine Eichlösung noch eine Dosierpumpe und man vermeidet Störungen durch die unerwünschte Einschleppung von Fremdstoffen und reaktionsfähigen Ionen, was bei Verwendung einer Eichlösung nie ganz ausgeschlossen werden kann.

Die Erfindung betrifft weiter eine Vorrichtung zur Durchführung des genannten Verfahrens, mit einer Messzelle, mit an diese angeschlossenen Mitteln zur Zuführung des Probenstroms und der Reagentien und mit einer Einrichtung für die Eichung der Messzelle.

Aus der US-A-4 449 981 ist eine Vorrichtung zum gesteuerten Freigeben eines Stoffes an eine Flüssigkeit bekannt, die einen Körper aus flüssigkeits- bzw. wasserlöslichem Glas aufweist, der eine Vielzahl von Hohlräumen besitzt, in denen das aktive Material angeordnet ist. Wird diese Vorrichtung in eine Flüssigkeit, z. B. Wasser, gebracht, so löst sich der Körper aus wasserlöslichem Glas nach und nach auf, wodurch er die die aktive Substanz enthaltenden Hohlräume nach und nach freigibt, so daß die aktive Substanz in vorbestimmter, gesteuerter Weise durch Lösung in die Flüssigkeit übergehen kann.

Die erfindungsgemässe Vorrichtung ist dadurch gekennzeichnet, dass die Eicheinrichtung einen Einsatz mit einem löslichen Glas für die Abgabe der zu messenden Ionen an den Probenstrom aufweist.

Vorteilhafte Ausgestaltungen des erfindungsgemässen Verfahrens und der erfindungsgemässen Vorrichtung sind in der nachfolgenden Beschreibung und in den Unteransprüchen angegeben.

Nachstehend wird die Erfindung anhand eines Ausführungsbeispiels und der Zeichnungen näher erläutert; es zeigen:

Fig. 1 ein Durchfluss-Schema einer Anordnung zur Messung von $Na^+$-Aktivität mit einer erfindungsgemässen Eicheinrichtung, und

Fig. 2 einen Schnitt durch die Eicheinrichtung der Anordnung von Fig. 1 in vergrösserter Darstellung.

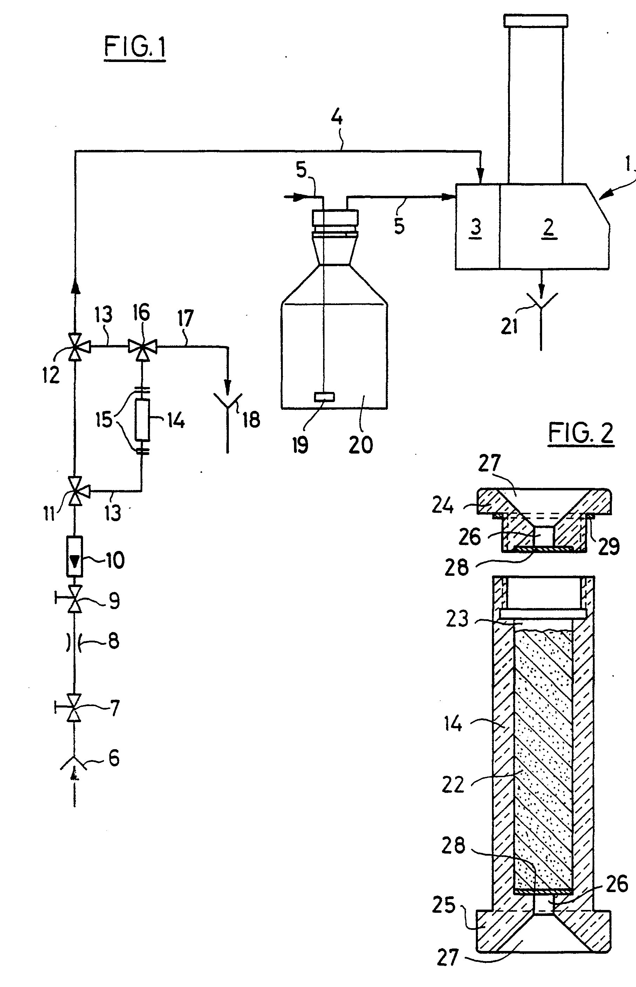

Die Vorrichtung zur Messung der Ionenaktivitätswerte, im dargestellten Fall der $Na^+$-Aktivitätswerte, eines Probenstroms besteht gemäss Fig. 1 aus einer Messzelle 1 mit einem Messteil 2 und einem Mischteil 3, in welchen zwei Leitungen 4 und 5 münden, und zwar die Leitung 4 für den Probenstrom und die Leitung 5 für das für die Konditionierung des Probenstroms dienende Reagens, welches im dargestellten Fall der $Na^+$-Messung ein Alkalisierungsmittel ist.

Die Leitung 4 für den Probenstrom enthält, in Flussrichtung des Probenstroms, einen Eingang 6 für den Probenstrom, ein Handventil 7, einen Druckregler 8 zur Einstellung eines konstanten Drucks des Probenstroms, ein Nadelventil 9 zur Einstellung des erforderlichen Durchflusses, einen Durchflussmesser 10 und zwei Umschaltventile 11 und 12, über die der Probenstrom wahlweise über einen als By-Pass ausgebildeten Zweig 13 für die Eichung der Vorrichtung geleitet werden kann.

Der Zweig 13 enthält eine Eicheinrichtung 14 in Form einer Eichpatrone, welche durch Schnellverschlusskupplungen 15 manuell in den Zweig 13 geschaltet werden kann, sowie ein Umschaltventil 16, von welchem eine Leitung 17 zu einem Ablauf 18 führt.

Ueber die Leitung 5 für das Alkalisierungsmittel wird Luft angesaugt und über eine Glasfritte 19 in einem Gefäss 20 mit $NH_4 OH$ geführt, wodurch die Luft mit $NH_3$ gesättigt wird. Die mit $NH_3$ gesättigte Luft, die somit das Alkalisierungsmittel bildet, wird im Mischteil 3 der Messzelle 1 mit dem Probenstrom von der Leitung 4 intensiv gemischt, wodurch dessen pH-Wert auf einen Wert über 10 ansteigt. Anschliessend strömt das Gemisch aus Probenstrom und $NH_3$-gesättigter Luft durch den Messteil 2 und gelangt schliesslich in einen Ablauf 21.

Der Messteil 2 der Messzelle 1 enthält im wesentlichen eine aus einer natriumselektiven Messelektrode und aus einer Ag/AgCl-Bezugselektrode bestehende Messkette. Das Gemisch aus Probenstrom und $NH_3$-gesättigter Luft strömt an der Messelektrode vorbei, wogegen die Bezugselektrode in einen passenden Elektrolyten, beispielsweise KCl oder LiCl bestimmter Konzentration eingetaucht ist. Unter Verwendung der beiden genannten Elektroden erfolgt die potentiometrische Messung auf $Na^+$-Ionen. Die Messzelle 1, welche nicht Gegenstand der vorliegenden Patentanmeldung bildet, ist in der EP-A-0 167 706 (veröffentlicht am 15.01.86) « Vorrichtung zur Messung geringer Ionenaktivitätswerte eines Probenstroms » der Anmelderin der vorliegenden Patentanmeldung vom 13. Juli 1984 beschrieben.

Im übrigen wird bezüglich der in Fig. 1 dargestellten Anordnung auf das von der Firma POLYMETRON, einer Tochtergesellschaft der ZELLWEGER USTER AG hergestellte und weltweit vertriebene $Na^-$-Analysegerät SODIMAT verwiesen.

Aufgrund von Veränderungen der natriumselektiven Messelektrode und des Diffusionspotentials der Bezugselektrode unterliegen Nullpunkt und Steilheit der Messkette über längere Zeit einer Drift, was deren Eichung in bestimmten Zeitintervallen erforderlich macht. Die Eichung wird dabei aus bekannten Gründen vorzugsweise in der Nähe des Bereichs der zu messenden Natriumionenaktivität vorgenommen und erfolgte bisher mittels einer geeigneten Eichlösung, was bei der Messung von niedriger Aktivitäten in der Grössenordnung Kleiner als $10^{-6}$ in hochreinem Wasser einige Schwierigkeiten bereitet hat. Denn es stellten sich höchste Anforderungen an die Zubereitung der Eichlösung und an die Präzision der Dosiereinrichtung für deren Zugabe an den Probenstrom.

Durch die Anordnung der Eicheinrichtung 14 im Zweig 13 lässt sich nun die Eichkonzentration unter Umgehung einer Eichlösung direkt im Probenstrom einstellen, wodurch Störungen durch die unerwünschte Einschleppung von Fremdstoffen und/oder reaktionsfähigen Ionen vermieden werden.

Die Eicheinrichtung 14 ist gemäss Fig. 2 durch eine Eichpatrone aus transparentem Material wie beispielsweise Plexiglas gebildet, welche eine eine Eichsubstanz 22 enthaltende Kammer 23 aufweist. Anschliessend an die Kammer 23 weist die Eichpatrone 14 einen Kopf- und einen Fussteil 24 bzw. 25 auf, von denen der eine, darstellungsgemäss der Kopfteil 24 mit der Eichpatrone 14 verschraubt ist. Fig. 2 zeigt den Kopfteil 24 im herausgeschraubten Zustand. Kopf- und Fussteil 24 und 25 weisen je eine zentrale Bohrung 26 und einen an diese anschliessenden Passkegel 27 auf, welch letztere zum Eingriff mit den Schnellverschlusskupplungen 15 (Fig. 1) vorgesehen sind. Zwischen die Bohrungen 26 und die Kammer 23 ist je ein Filterplättchen 28 eingelegt, welches den Austritt der Eichsubstanz 22 aus der Kammer 23 verhindert. Der Kopfteil 24 und der übrige Teil der Eichpatrone 14 sind durch eine Dichtung 29 abgedichtet.

Die Eichsubstanz 22 ist durch ein wasserlösliches, Natriumionen abgebendes Glas von körniger oder granulatartiger Form gebildet. Derartige Gläser sind bisher für medizinische Anwendungen oder für Anwendungen in Verbindung mit verwitterungsbeständigen Anstrichen bekannt und beispielsweise in der US-PS 4 350 675 beschrieben. Das im vorliegenden Fall als Eichsubstanz 22 verwendete Glas ist ein Natriumpolyphosphatglas, welches bei Kontakt mit dem wässrigen Probenstrom an diesen bei bekannter Temperatur eine definierte Menge Natrium abgibt. Da der Durchfluss des Probenstroms ebenfalls bekannt ist, ergibt sich in diesem eine definierte Natriumkonzentration. Ein derartiges Glas ist in der EP-A-0 168 936 (veröffentlicht am 22.01.86) « Water soluble composition for preparing analytical solutions » der International Standard Electrical Corp. vom 18. Juli 1984 (Case Drake-95) beschrieben.

Die sich im Probenstrom, wenn dieser über den By-Pass 13 (Fig. 1) durch die Eichpatrone 14 geleitet wird, einstellende Natriumionenaktivität ist also von der Temperatur, vom Durchfluss des Probenstroms und von der Zusammensetzung des wasserlöslichen Natriumpolyphosphatglases abhängig. Beispielsweise ergibt sich bei einem Durchfluss von 3,5 l/h und 20 °C mit einem Glas der Zusammensetzung CaO : 50,4 Mol%, $Na_2O$ : 2,5 Mol%, $P_2O_5$ : 47,1 Mol% eine Konzentration von 3 ppb $Na^+$.

Die gewünschte Eichpatrone 14 wird von Hand durch die Schnellverschlusskupplungen 15 in den By-Pass 13 (Fig. 1) geschaltet, der für den Fall, dass die Eichungen manuell vorgenommen werden, das Umschaltventil 16, die Leitung 17 und den Ablauf 18 nicht aufzuweisen braucht. Wenn nun die Umschaltventile 11 und 12 so geschaltet werden, dass die direkte Verbindung zwischen ihnen gesperrt ist, dann wird der Probenstrom durch die Eichpatrone 14 geleitet und es erfolgt die Eichung der Anordnung. Nach dieser werden die Umschaltventile 11 und 12 entsprechend geschaltet und die Anordnung von Fig. 1 befindet sich im messbereiten Zustand.

Die Eichung kann jeweils mit einer einzigen Eichpatrone 14 erfolgen, auf die die sich ergebende $Na^+$-Konzentration aufgedruckt und der eine Temperaturkurve beigegeben ist, die selbstverständlich auch in die Software der Anordnung integriert sein kann. Die auf der Eichpatrone 14 aufgedruckte Konzentration wird mittels des Nullpunkts der Messkette eingestellt. Dabei wird davon ausgegangen, dass die Steilheit der Messkette konstant geblieben ist, dass die Konzentration durch die Eichpatrone 14 mindestens 50- bis 100-mal höher liegt als die Probenkonzentration, und dass Temperatur und Durchfluss den spezifierten Angaben entsprechen.

Man kann die Genauigkeit dieser Eichung, die jedoch praktisch für alle üblichen Anforderungen ausreicht, dadurch erhöhen, dass man den Probenstrom zuerst mittels einer Ionenaustauschpatrone auf « Null »-Natrium reinigt und erst anschliessend durch die Eichpatrone 14 leitet. Dann stimmt der angegebene Konzentrationswert genau. Soll schliesslich die Steilheit der Messkette ebenfalls neu eingestellt werden, dann kann dies mittels einer zweiten Eichpatrone 14 mit unterschiedlichen Konzentration geschehen.

Diese letztere Variante der Eichung mit zwei Eichpatronen 14 unterschiedlicher Konzentration wird vorzugsweise angewendet, wobei dann der By-Pass 13 (Fig. 1) zwei parallele Aeste mit je einer Eichpatrone 14 aufweist. Wenn man dann durch einen Mikrocomputer Nullpunkt und Steilheit nach der bekannten Additionsmethode mit Iteration berechnet, dann kann die Eichung ohne Kenntnis des Grundgehalts des Probenstroms an $Na^+$ erfolgen.

Die Verwendung eines Mikrocomputers ermöglicht eine Automatisierung des Eichvorgangs, wobei für eine ausreichend lange Zeit zwei Eichpatronen von unterschiedlicher Konzentration eingesetzt sind. Für diese automatische Eichung ist es vorteilhaft, wenn der By-Pass 13 gemäss Fig. 1 ausgeführt ist, d. h. das Umschaltventil 16 und die zum Ablauf 18 führende Leitung 17 aufweist. Die Umschaltventile 11, 12 und 16 sind dann maschinell betätigbar und werden durch den Mikrocomputer gesteuert. Damit die Eichung verzögerungsfrei stattfinden kann, wird im normalen Messbetrieb der Anordnung, wo die direkte Verbindung zwischen den Umschaltventilen 11 und 12 durchgeschaltet ist, ein geringer Teil des Probenstroms über das Umschaltventil 11 durch den By-Pass geleitet und durchströmt die Eichpatronen 14, die dann nicht trocken werden und somit stets ohne Verzögerung für die Eichung bereit sind. Das Umschaltventil 16 leitet dann im Messbetrieb der Anordnung den Teil des Probenstroms von der Eichpatrone 14 über die Leitung 17 zum Ablauf 18.

Für diese automatisierte Eichung ist es vorteilhaft, wenn das Polyphosphatglas aus kleinen rechteckigen Plättchen besteht, sodass die bei der Auflösung der Plättchen auftretende Oberflächenveränderung klein bleibt. Noch vorteilhafter ist es, wenn das Polyphosphatglas aus einem oder mehreren in Längsrichtung der Kammer 23 angeordneten und an seiner bzw. ihrer äusseren und inneren Oberfläche vom Probenstrom umspülten Röhrchen besteht. Dann heben sich nämlich die entsprechenden Oberflächenveränderungen gegenseitig auf und die Oberfläche bleibt konstant.

Wenn das erfindungsgemässe Verfahren auch in der vorangehenden Beschreibung im Zusammenhang mit einem $Na^+$-Analysator beschrieben ist, so soll dies nicht als Einschränkung verstanden werden. Denn es ist für den Fachmann klar, dass das Verfahren auch für die Messung anderer Kationen- und von Anionenaktivität sowie für andere Messungen, beispielsweise für die Messung von freiem Chlor, verwendet werden kann, wofür lediglich ein wasserlösliches Glas anderer Zusammensetzung erforderlich wäre.

## Patentansprüche

1. Verfahren zur Messung geringer Aktivitätswerte von Ionen eines Probenstroms in einem Analysenautomaten, bei welchem der Probenstrom durch Zugabe von Reagentien konditioniert und die Konzentration der Ionen mittels eines an eine Einrichtung zur Abgabe einer entsprechenden Eichsubstanz anschliessbaren Messsystem gemessen wird, dadurch gekennzeichnet, dass als Eichsubstanz (22) ein lösliches Glas für die definierte Abgabe einer bekannten Menge der zu messenden Ionen verwendet und die Eichkonzentration direkt im Probenstrom eingestellt wird.

2. Verfahren nach Anspruch 1, dadurch gekennzeichnet, dass man zwei Eichsubstanzen (22) unterschiedlicher Konzentration verwendet.

3. Verfahren nach Anspruch 1 oder 2, dadurch gekennzeichnet, dass man für die Messung der Aktivitätswerte von $Na^+$-Ionen als lösliches Glas ein Natriumpolyphosphatglas verwendet.

4. Verfahren nach Anspruch 3, dadurch gekennzeichnet, dass das Natriumpolyphosphatglas folgende Zusammensetzung aufweist : CaO : 45 bis 55 Mol%, $Na_2O$ : 0,5 bis 10 Mol%, $P_2O_5$: 45 bis 55 Mol%.

5. Vorrichtung zur Durchführung des Verfahrens nach Anspruch 1, mit einer Messzelle, mit an dieser angeschlossenen Mitteln zur Zuführung des Probenstroms und der Reagentien und mit einer Einrichtung für die Eichung der Messzelle, dadurch gekennzeichnet, dass die Eicheinrichtung einen Einsatz (14) mit einem löslichen Glas (22) für die Abgabe der zu messenden Ionen an den Probenstrom aufweist.

6. Vorrichtung nach Anspruch 5, dadurch gekennzeichnet, dass die Mittel (4) zur Zuführung des Probenstroms einen Seitenzweig (13) aufweisen, über welchen der Probenstrom wahlweise führbar ist, und dass der Einsatz (14) mit dem löslichen Glas (22) in diesem Seitenzweig angeordnet ist.

7. Vorrichtung nach Anspruch 6, dadurch gekennzeichnet, dass der Seitenzweig (13) zwei parallele Aeste mit je einem Einsatz (14) mit löslichem Glas (22) verschiedener Konzentration aufweist.

8. Vorrichtung nach Anspruch 6 oder 7, dadurch gekennzeichnet, dass der Seitenzweig (13) im Messbetrieb der Vorrichtung von einem geringen Teil des Probenstroms durchflossen ist, welcher vom Seitenzweig über eine Leitung (17) zu einem Ablauf (18) geführt ist.

9. Vorrichtung nach einem der Ansprüche 5 bis 8, dadurch gekennzeichnet, dass der Einsatz (14) eine Kammer (23) für das lösliche Glas (22) sowie je einen an diese anschliessenden Kopf- und Fussteil (24 bzw. 25) mit einer Oeffnung (26) für den Durchtritt des Probenstroms aufweist.

10. Vorrichtung nach Anspruch 9, dadurch gekennzeichnet, dass jede Oeffnung (26) an ihrem einen Ende gegen die Kammer (23) durch ein Filterplättchen (28) abgeschlossen ist und an ihrem Ende in einen Pass-Kegel (27) ausläuft, der zum Eingriff in eine Schnellverschlusskupplung (15) vorgesehen ist.

11. Vorrichtung nach Anspruch 9, dadurch gekennzeichnet, dass die Kammer (23) das lösliche Glas (22) in körniger, granulatartiger Form enthält.

12. Vorrichtung nach Anspruch 9, dadurch gekennzeichnet, dass die Kammer (23) das lösliche Glas (22) in Form kleiner Plättchen enthält, deren Dimension in Länge und Breite gross ist im Verhältnis zur Dicke.

13. Vorrichtung nach Anspruch 9, dadurch gekennzeichnet, dass die Kammer (23) das lösliche Glas (22) in Form von Röhrchen enthält, welche in Längsrichtung der Kammer angeordnet und sowohl an ihrer äusseren, als auch an ihrer inneren Oberfläche vom Probenstrom umspült sind.

## Claims

1. A method of measuring small activity values of ions of a sample flow in an automatic analyser in which the sample flow is conditioned by the addition of reagents and the concentration of the ions is measured by means of a measurement system connectable to a device for dispensing a corresponding calibration substance, characterized in that a soluble glass is used as the calibration substance (22) for the defined dispensing of a known quantity of the ions to be measured and the calibration concentration is adjusted directly in the sample flow.

2. Method in accordance with claim 1, characterized in that one uses two calibration substances (22) of different concentration.

3. Method in accordance with claim 1 or claim 2, characterized in that one uses a sodium polyphosphate glass as a soluble glass for the measurement of the activity values of Na+-ions.

4. Method in accordance with claim 3, characterized in that the sodium polyphosphate glass has the following composition: CaO: 45 to 55 mol%, Na$_2$O: 0,5 to 10 mol%, P$_2$O$_5$: 45 to 55 mol%.

5. Apparatus for carrying out the method of claim 1 comprising a measurement cell with means connected to the latter for supplying the sample flow and the reagents and with a means for the calibration of the measurement cell, characterized in that the calibration means has an insert (14) with a soluble glass (22) for the dispensing of the ions to be measured to the sample flow.

6. Apparatus in accordance with claim 5, characterized in that the means for supplying the sample flow has a side branch (13) by which the sample flow can be selectively directed; and in that the insert (14) with the soluble glass (22) is arranged in this side branch.

7. Apparatus in accordance with claim 6, characterized in that the side branch (13) has two parallel branches each having an insert (14) with soluble glass (22) of different concentrations.

8. Apparatus in accordance with claim 6 or claim 7, characterized in that, in measurement operation of the apparatus, a small part of the sample flow flows through the side branch (13) and is directed from the side branch via a line (17) to a drain (18).

9. Apparatus in accordance with one of the claims 5 to 8, characterized in that the insert (14) has a chamber (23) for the soluble glass (22) and also, adjoining this chamber, one each of head and base parts (24, 25) with an opening (26) for the passage of the sample flow.

10. Apparatus in accordance with claim 9, characterized in that each opening (26) is closed at its one end relative to the chamber (23) by a filter platelet (28) and runs out at its other end into a fitting cone (27) which is provided for engagement into a quick release coupling (15).

11. Apparatus in accordance with claim 9, characterized in that the chamber (23) contains the soluble glass (22) in grain-like, granular form.

12. Apparatus in accordance with claim 9, characterized in that the chamber (23) contains the soluble glass (22) in the form of small platelets the dimensions of which are large in length and width in relation to the thickness.

13. Apparatus in accordance with claim 9, characterized in that the chamber (23) contains the soluble glass (22) in the form of tubules which are arranged in the longitudinal direction of the chamber and are flushed both at their outer surfaces and also at their inner surfaces by the sample flow.

## Revendications

1. Procédé de mesure de faibles activités ioniques d'un courant d'échantillon dans un appareil automatique d'analyse, dans lequel le courant d'échantillon est conditionné par l'addition de réactifs et la concentration des ions est mesurée à l'aide d'un système de mesure raccordable à un dispositif de délivrance d'un produit-étalon correspondant, caractérisé en ce qu'on utilise comme produit-étalon (22) un verre soluble pour la délivrance définie d'une quantité comme des ions à mesurer et qu'on ajuste la concentration du produit-étalon directement dans le courant d'échantillon.

2. Procédé suivant la revendication 1, caractérisé en ce qu'on utilise deux produits-étalons (22) de concentration différente.

3. Procédé suivant la revendication 1 ou 2, caractérisé en ce qu'on utilise comme verre soluble, pour mesurer l'activité des ions $Na^+$, un verre de polyphosphate de sodium.

4. Procédé suivant la revendication 3, caractérisé en ce que le verre de polyphosphate a la composition suivante : CaO : 45 à 55 % en mole, $NA_2O$ : 0,5 à 10 % en mole, $P_2O_5$: 45 à 55 % en mole.

5. Dispositif de mise en œuvre du procédé suivant la revendication 1, ayant une cellule de mesure et des moyens qui y sont raccordés pour l'alimentation du courant d'échantillon et des réactifs, et ayant un dispositif d'étalonnage de la cellule de mesure, caractérisé en ce que le dispositif d'étalonnage a une cartouche (14) garnie d'un verre soluble (22) pour délivrer les ions à mesurer dans le courant d'échantillon.

6. Dispositif selon la revendication 5, caractérisé en ce que les moyens d'alimentation (4) du courant d'échantillon ont un branchement latéral (13) par lequel le courant d'échantillon peut passer au choix, et que la cartouche (14) garnie du verre soluble (22) est disposée dans ce branchement latéral.

7. Dispositif selon la revendication 6, caractérisé en ce que le branchement latéral (13) a deux branches parallèles ayant chacune une cartouche (14) garnie du verre soluble (22) de concentration différente.

8. Dispositif selon la revendication 6 ou 7, caractérisé en ce que, pendant que le dispositif fonctionne pour la mesure, le branchement latéral (13) est parcouru par un flux d'une petite partie du courant d'échantillon qui est conduite à une évacuation (18) par un conduit (17) partant du branchement latéral.

9. Dispositif selon l'une quelconque des revendications 5 à 8, caractérisé en ce que la cartouche (14) a une chambre (23) pour le verre soluble (22) et que chaque cartouche a une partie-tête et une partie-pied (24 et 25), adjacente à cette chambre, pourvue d'un orifice (26) pour le passage du courant d'échantillon.

10. Dispositif selon la revendication 9, caractérisé en ce que chaque orifice (26) est fermé à l'une de ses extrémités en regard de la chambre (23) par une plaquette filtrante (28), l'autre extrémité se terminant par un cône d'ajustement (27) prévu pour un engagement dans une liaison de raccordement rapide (15).

11. Dispositif selon la revendication 9, caractérisé en ce que la chambre (23) renferme le verre soluble (22) sous forme de grains de type granulés.

12. Dispositif selon la revendication 9, caractérisé en ce que la chambre (23) renferme le verre soluble (22) sous forme de petites plaquettes dont la dimension en longueur et largeur est grande par rapport à l'épaisseur.

13. Dispositif selon la revendication 9, caractérisé en ce que la chambre (23) renferme le verre soluble (22) sous forme de petits tubes orientés selon la longueur de la chambre et qui sont baignés par le courant d'échantillon aussi bien sur leur surface externe que sur leur surface interne.

FIG.1

FIG. 2